# EUROPEAN PATENT APPLICATION

(11) **EP 4 715 196 A1**
(43) Date of publication of application: **25.03.2026**
(21) Application number: 24201445.4
(22) Date of filing: 19.09.2024
(51) Int. Cl.: F03D 7/02, F03D 7/04, F03D 80/00, F03D 80/10

(54) **WIND FARM SAFETY CONTROL**

(71) Applicant: Siemens Gamesa Renewable Energy A/S, 7330 Brande (DK)
(72) Inventor: Hawkins, Samuel, 7100 Vejle (DK); Soerensen, Johnny, 6920 Videbaek (DK)
(74) Representative: SGRE-Association

(57) **Abstract**

The present invention relates to a method to control a wind turbine (2) in a wind farm (1) with multiple wind turbines (2), the method including providing detection means (7) adapted to detect objects (6) entering a detection zone (8) associated with at least one of the wind turbines (2), wherein the method further includes,
- a step (100) of detection of an object (6) entering the associated detection zone (8) of a wind turbine (2), the wind turbine (2) upon detection of such an object (6) being an affected wind turbine (2'),
- a step (110) of operating the affected wind turbine (2') in a safety mode involving at least reducing the spinning speed of the affected wind turbine (2') rotor,

The present invention further relates to the wind farm (1) controlled accordingly, and a controller performing the control.

## Description

### Field of invention

The present invention relates to the control of a wind farm. More particular it relates to a safety control to avoid hazarded encounters between larger objects and spinning rotors and blades of the wind turbines.

Wind farms, or wind parts, comprising a collection of a plural of wind turbines may be positioned on land (onshore) or e.g. at the ocean (offshore). The length of the blades may reach to more than 100 meters, especially for offshore turbines typically being larger than onshore turbines.

During the rotation the end-tips of the blades may reach speeds of more than 250 km/h. Any collision with incoming objects, such as, but not limited to, ships, boats, helicopters, airplanes etc. with blades spinning at such high speeds could both cause severe damage to the object and the wind turbine, and even worse could be lethal to people present in the vessels or in the vicinity.

The objects could be approaching vessels like a ship providing spare parts for servicing, or a helicopter bringing in servicepersons to be landed on top of the nacelle. It could also be vessels drifting unguided or unauthorized towards a wind turbine. In either case, it could lead to hazardous situations.

The present invention therefore introduces a solution to prevent inadvertent collision of the spinning wind turbine rotor with a large object, or vessel, approaching the wind turbine.

### Summary of the invention

Method according to the solution of the problem includes to control a wind turbine in a wind farm with multiple wind turbines, the method including providing detection means adapted to detect objects entering a detection zone associated with at least one of the wind turbines, wherein the method further includes,
- a step of detection of an object entering the associated detection zone of a wind turbine, the wind turbine (2) upon detection of such an object being an affected wind turbine,
- a step of operating the affected wind turbine in a safety mode involving at least reducing the spinning speed of the affected wind turbine rotor,

Changing to the safety mode of operation with the at least reduced spinning speed has an advantage, if the spinning speed is above zero, then the wind turbine is still producing power, but is at the same time prepared to a quicker stop of the spinning due to the lower spinning speed, if needed.

If only the affected wind turbine changes mode of operation, the remaining wind turbines maintain their power production.

The detection zone may be divided into any number of subzones related to a distance to the respective wind turbine. This means, the closer the object gets to the affected wind turbine, the more 'harsh' reactions, or modes of operation, can be introduced. For this, each subzone thus may be associated with a safety mode control. For example, the safety mode control actions may include,
- for one subzone is a simple reduction in rotor speed,
- for a second subzone idling of the rotor
- for a third subzone breaking the rotor to standstill.

The safe mode may include a sequence of control actions as the object gets closer to the associated wind turbine, thus making the wind turbine more 'prepared' for the approach of the object, making it quicker to implement a next safe mode of the sequence.

The safety mode may include a gradual decreasing of the rotor spinning speed in dependence of the distance of the object to the associated wind turbine, thus at the same time making e.g. a needed stop quicker, but at the same time keeping producing significant power.

The safety mode further may include a step of checking for available not utilized power in the wind farm, thus as possible to compensate the missing power from the affected wind turbine by this available not utilized power.

The available power may be checked by checking for curtailed or stopped not affected wind turbines and/or checking for available power in energy storages connected with the wind farm.

If the check reveals available additional power in the wind farm, then at least a part of it is activated to compensate for the power loss of power due to the activated safety mode of the affected wind turbine.

The method may further include a step, that once it is detected the object has left the detection zone, and no further objects are present, the affected wind returns to normal scheduled operation.

The present invention further relates to the wind farm adapted to operate according to any of the embodiments.

The present invention further relates to a controller with a processor and memory storage adapted to perform the method according to any of the embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind farm with objects entering wind turbine detection zones.
- Figure 2A, B: shows flow charts regarding the control of wind turbines and a wind farm according to embodiments of the present invention upon detection of objects entering detection zones.
- Figure 3A-D: shows a wind farm with a detection zone 8 divided into subzones and where an object enters the different subzones.

### Detailed Description

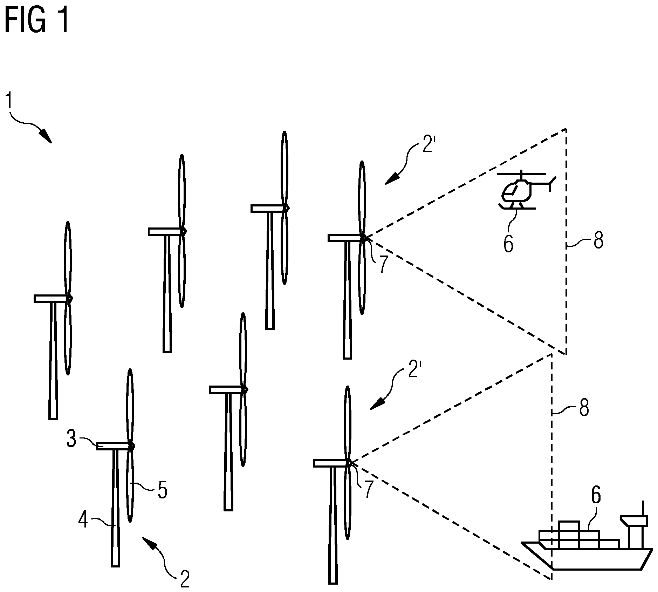

Figure 1 illustrates a typical wind farm 1 (or wind park) comprising a plural of wind turbines 2. Each wind turbine 2 comprises a nacelle 3 positioned at the top of a tower 4. The nacelle 3 includes blades 5 connected to a rotor being turned by incoming wind to generate power via a generator.

The wind turbines 2 can be controlled for example by changing a rotation of the nacelle (yawing) in relation of the blades 5 to the direction of the incoming wind, or by pitching the blades by changing their blades angles. Feathering the blades to 90 degrees makes the thrust load on the rotor quite low, at least for cases with aligned flow by yawing. This is also referred to as idling.

Wind farms may be positioned on land (onshore) or in water like in the ocean (offshore). The length of the blades 5 may reach to more than 100 meters, especially for offshore turbines 2 traditionally being larger than those adapted for onshore.

During the rotation the end-tips of the blades 5 could reach speeds of more than 250 km/h. Any collision with incoming objects 6, such as but not limited to, ships, boats, helicopters, airplanes etc., could cause serve damage or even be lethal if the blades 5 were to hit the objects 6.

The present invention therefore introduces a solution to prevent inadvertent collision of the spinning wind turbine rotor with a large object, or vessel 6.

The control of the method of the present invention is done by a controller of any kind, e.g. the wind farm 1 controller, SCADA, one dedicated wind turbine 2 controller etc. The controller comprising the required means like a processor, CPU, data storage means, data exchanging means with the sensors 7 etc.

Sensors 7 of any suitable kind may be adapted to detect objects 6 traveling at courses that could bring them into contact with the spinning blades 5.

In one embodiment the sensors 7 are radars, video cameras or other suitable devices. They could be turbine-mounted and placed at suitable positions at one or more of the wind turbines 2, like at the corner wind turbines 2. They could also be positioned at all the wind turbines 2 in the wind farm 1, or even outside them, in-between them, at the OSS (the offshore substation), etc.

Alternatively, in a lower cost embodiment a wind farm level controller interfaces a with publicly available vessel AIS or ADS-B, at least in principle for all possible approaching vessels 6 containing their data and information, e.g. in relation to size and traveling path. Such information, for example could enable the exclusion from the safety regulation according to the present invention, of small boats or ships being of sizes where they would be at safe distance below the spinning blades 5. The automatic identification system (AIS) is an automatic tracking system that uses transceivers on ships and is used by vessel traffic services (VTS). Although technically and operationally distinct, the Automatic Dependent Surveillance-Broadcast (ADS-B) system is analogous to AIS and performs a similar function for aircraft. This solution however would not spot objects 6 of some reason not registered by AIS or ADS-B.

In one embodiment the invention includes a combination of the above. It both includes at least one sensor 7 to detect incoming objects 6, but in addition the controller is adapted to get information from means like the AIS and/or the ADS-B. This allows a double check, where the sensor 7 for example detect an object 6 and then confirms with the AIS and/or the ADS-B, the size etc. of the object 6. In the same manner it could also expect the incoming object 6 due to information from the AIS and/or the ADS-B to be confirmed by the observation by the sensor 7.

In some embodiments, sensors 7 is adapted to register objects 6 entering a detection zone 8. The detection zone could cover the whole of the area of the wind farm 1, including a circumference section, or may be adapted particular for specific zones or directions, e.g. incoming paths like waterways for large ships. Multiple sensors 7 may be positioned such that they can operate together with combined detection zones 8, to cover the whole area of interest.

For each wind turbine 2 there may be an associated detection zone 8. This could be areas 8 covering a given distance from the respective wind turbines 2. It could extend in all direction relative to the wind turbines 2, e.g. covering an encircling area of the wind turbine 2 at given radii. It could also to in specific directions, e.g. be triangular or cone shaped extending with a pointed edge from the respective wind turbine 2.

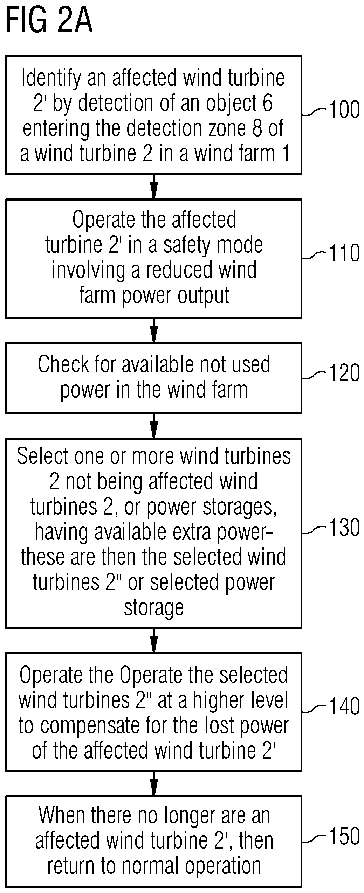

During operation of the wind farm 1, the present method includes a step 100 of detection of an object 6 entering the associated detection zone 8 of a wind turbine 2. See also figure 2A. In the following this wind turbine 2 is referred to as an affected wind turbine 2'.

The step 100 may also include to observe the direction, speed etc. of the object 6 in the detection zone 8. If it can be recognized the object 6 is not heading towards the wind turbine 2, it may be regarded as not critical to this wind turbine 2, and no associated safety mode action initiated. Wind turbines 2 may however share detection zones 8, and where the observed object 6 is marked as not critical to one wind turbine 2 upon entering a detection zone 8, it may, e.g. due to its direction, be marked as critical to second wind turbine 2, this then being an affected wind turbine 2' entering a safe mode control. Affected turbines 2' may thus only be those wind turbines 2 where possible critical object 6 is detected in its associated detection zone 8, objects that for example has a direction that potentially could bring them in contact with the spinning blades.

Once an object 6 is detected within a detection zone 8 causing a wind turbine 2 to become an affected wind turbine 2', the method includes a step 110 of operating the affected turbine 2' in a safety mode. The safe mode involves some rotor spinning speed reduction of the associated wind turbine 2''. This may include a general simple reduction in rotor speed, an idling of the rotor and/or a braking of the rotor to standstill, or a combination such as a sequence thereof. This reduction in turn results in a reduced wind farm 1 total power output, or generated power.

Often wind farms 1 within given time frames are operated under a committed, or agreed, scheduled power output. By the safety mode reduction in power generation, this may not be obtainable.

To compensate, the present method includes, for the overall wind farm 1, or a sub-group of the wind turbines 2, a step 120 of checking for available but not utilized additional power. In the present context, 'utilize' refers to the wind farm 1 at the present conditions (wind etc.) has the capacity to produce, or at least output, more power compared to before initiating the safety mode.

The unused capacity could be due to wind turbines 2 being curtailed, thus producing less than their nominal power according to the present conditions. Some of the turbines 2 may also be fully stopped, or some wind turbines 2 may be able to run overrated (at higher power generation output than what the wind turbines 2 nominal power generation).

Alternatively, or additionally, the additional not utilized power could be power stored in batteries or by any other suitable power storage means, and being available, hence not scheduled or committed elsewhere. In an embodiment, the wind farm 1 thus includes at a least one energy storage, and the step 120 includes checking for available power of the energy storage not scheduled or committed elsewhere.

For any of these embodiments. If the checks reveal available additional power in the wind farm 1, then at least a part of it may be activated by the controller. The method thus may include a step 130 of selecting one or more wind turbines 2 not being affected wind turbines 2, or power storages having available extra power (in the following referred to as these the selected wind turbines 2'' or selected power storage). These could form a single, a plural, or all the respectively non-affected wind turbines 2 and/or power storages, and/or a combination thereof.

In a step 140 the selected wind turbines 2" and/or selected power storages then are operated at an increased power generation and/or output level compared to what was set and scheduled prior to the detection of the object 6, to compensate for the lost power of the affected wind turbine 2' .

In a step 150, once it is detected the object 6 has left the detection zone 8, and no further objects 6 are present, the affected wind 2' returns to normal scheduled operation, no longer being marked as an affected wind turbine 2'. In the same manner the selected wind turbines 2", and/or selected storage, will adjust operation accordingly. At the wind farm 1 level, if there are no further affected wind turbines 2', then the operation will return fully to normal.

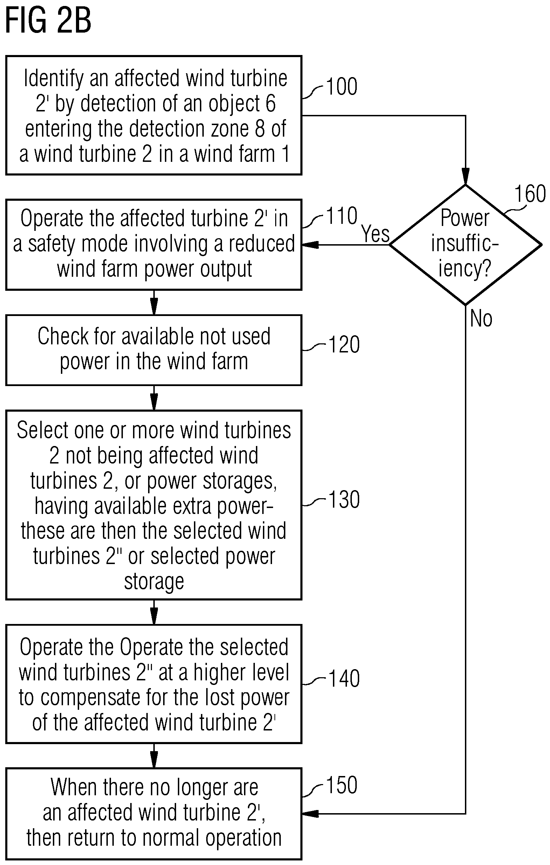

As indicated above, wind farms 1 may be operated under a committed, or agreed, scheduled power output within a given time frame. Therefore, in an embodiment, the method includes a step 160 (figure 2B) of comparing the present generated total power and the expected generated power under the new conditions for the rest of the time frame to the committed power. If sufficient power is expected to be generated, then no further actions is needed, otherwise the method includes compensating by the method according to steps 120-150.

Any of the wind turbines 2 in the wind farm 1 can be an affected wind turbine 2'. Which turbines 2 will be perceived as affected turbines depends on, among other things the direction of movement and speed of the object 6 in relation to the respective wind turbine 2. In the same manner, depending on for example the direction of movement and speed of the object 6 there can be more than one affected wind turbine 2' at the same time.

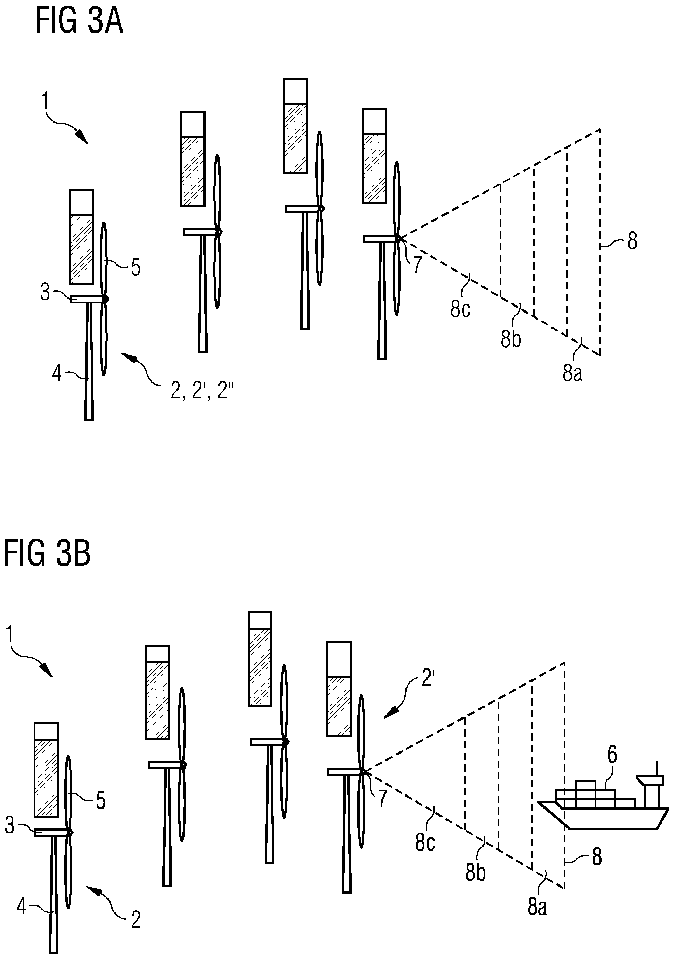

Each detection zone 8 may be subdivided into any number of subzones 8a, 8b, 8c, such as three as in the illustration of figures 3A-D. Each subzone 8a,b,c may be related to a distance of the object 6 to a wind turbine 2, and each may be associated with a reaction by the respective wind turbine 2 in a safe mode control.

The subzones 8a, 8b, 8c each may represent a level of criticality of the object 6 relative to a wind turbine 2, each associated with a specific reaction according to the safe mode control.

As example, the least critical subzone 8a may be defined by a first threshold distance from a wind turbine 2, and the associated safety mode could be a general simple reduction in rotor speed. The second subzone 8b could be defined by second threshold distance from the wind turbine 2 being shorter than the first threshold. The associated safety mode then could be to introduce an idling of the rotor. The most critical I subzone 8c may be defined by a third threshold distance to the wind turbine 2 being shorter than the second threshold. The associated safety mode could be braking of the rotor to standstill. The safe mode thus could include a combination of actions such as a sequence of actions.

In a related embodiment the safety mode includes a gradual decreasing of the rotor spinning speed in dependence of the distance of the object 6 to the associated wind turbine 2', optionally also its velocity or speed. The closer the object 6 comes to the associated wind turbine 2', the more the rotor spinning speed is decreased, or slowed down. The blades then could be idled a when the object 6 passes the second threshold, and/or being braked to standstill at a the third threshold.

In the embodiment of figures 3A-D a sensor 7 is positioned in relation to the nacelle 3 of one of the wind turbines 2, but it could have been positioned elsewhere according to previously indications, or in relation or a plural such as all the wind turbines 2 etc. The wind farm 1 in the illustrated embodiment comprises four wind turbines 2, but any number applies.

In figure 3A there is no object 6 of possible hazard observed within the detection zone 8. The wind turbines 2 are all running normal according to schedule, in the illustrated embodiment, this means all wind turbines 2 presently are set to operate at 75% of nominal value.

In figure 3B an object 6 is detected entering the first subzone 8a, a controller thus initiates a safe mode control of the affected wind turbine 2'. In the illustrated embodiment the associated safe mode control is a reduction of rotor speed to produce 60% of its nominal values. Correspondingly, since the other three turbines 2 each have available and not utilized power (25% of the nominal value), all three becomes selected wind turbines 2'', their power generation increased to 80%, thus fully compensating for the loss of generated power by the affected wind turbine 2'.

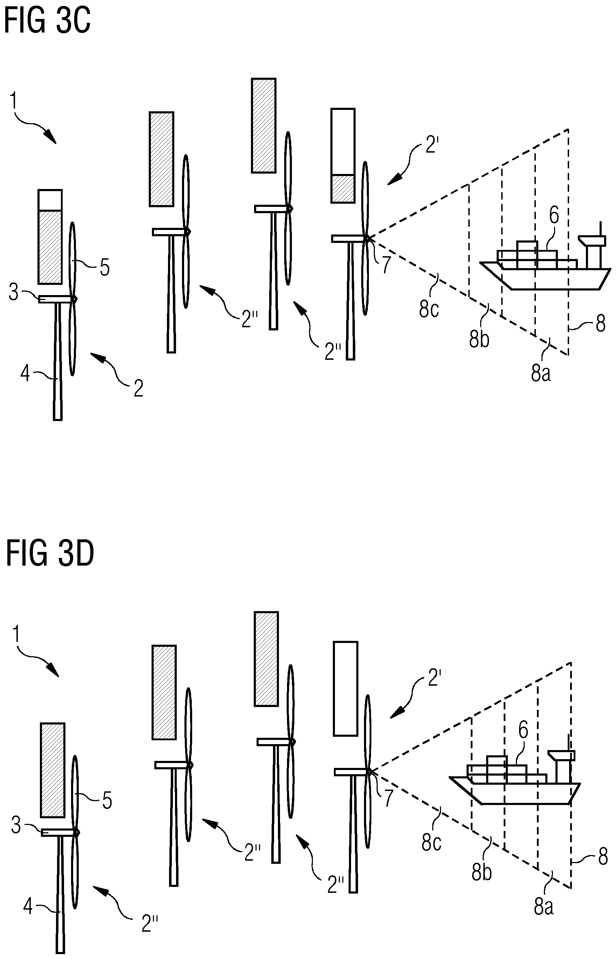

Figure 3C illustrates the object 6 entering the second subzone 8b. The associated wind turbine 2' is operated according to an associated safe mode control where the rotor is idled. In the illustration, this results in its power generation being reduced to 25% of nominal value. In the example the leftmost selected wind turbine 2'' is still selected, but remains unchanged at 80% compared to figure 3B, whereas the remaining two selected wind turbines 2'' now are adjusted to compensate for the further power reduction of the affected wind turbine 2'.

This illustrates that all selected wind turbines 2" and/or selected energy reservoirs need not to compensate with equal shares, but the controller generates an appropriate compensation schedule.

In figure 3D the object 6 has entered the third and closest subzone 8c, where the affected wind turbine 2' rotor has been brought to standstill according to the associated safe mode. Thus, the affected wind turbine 2' generates no power, the total wind farm 1 power loss being compensated by the selected wind turbines 2".

It should be emphasized the values indicated are purely for explanation of the concept, the specific values have as such no relevance to actual real-world function of the present method.

For any of the above embodiments, there can be more than one affected wind turbine 2' at any time. This can for example be due to the course of a single object 6 following a path (e.g. a straight line, along an expected paths of a waterway etc.), that potentially could bring it in contact with several wind turbines 2. The situation then could be an object 6 directing into possible contact with two wind turbines 2, each thus becoming affected wind turbines 2'. At a time, when the object for example enters a first subzone 8a of a second affected wind turbine 2', it may be within the third subzone 8c of a first affected wind turbine 2'. The first and second affected wind turbines 2' thus being controlled according to the safe mode respective third subzone 8a and first subzone 8c reactions etc.

In the same manner, several objects 6 may also be within the detection zones 8 of the wind farm, and even within a detection zone 8 or subzone 8a, 8b, 8c of a single wind turbine 2. In the latter example, if a plurality of objects 6 are registered within a detection zone 8 of a thus affected wind turbine 2', it will react according to the most critical one. For example, if one object 6 is within a third subzone 8c it may go to full stop despite the second object 6 is only within the first subzone 8a.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Method to control a wind turbine (2) in a wind farm (1) with multiple wind turbines (2), the method including providing detection means (7) adapted to detect objects (6) entering a detection zone (8) associated with at least one of the wind turbines (2), wherein the method further includes,
- a step (100) of detection of an object (6) entering the associated detection zone (8) of a wind turbine (2), the wind turbine (2) upon detection of such an object (6) being an affected wind turbine (2'),
- a step (110) of operating the affected wind turbine (2') in a safety mode involving at least reducing the spinning speed of the affected wind turbine (2') rotor.

2. Method according to claim 1, wherein the detection zone (8) is divided into any number of subzones (8a, 8b, 8c) related to a distance to the respective wind turbine (2).

3. Method according to claim 2, wherein each subzone (8a, 8b, 8c) is associated with a safety mode control.

4. Method according to claim 3, wherein the safety mode control actions include,
- for one subzone (8a) simple reduction in rotor speed,
- for a second subzone (8b) idling of the rotor
- for a third subzone (8c) breaking the rotor to standstill.

5. Method according to claim 4, wherein the safe mode includes a sequence of control actions as the object gets closer to the associated wind turbine (2')

6. Method according to any of claims 1-5, wherein the safety mode includes a gradual decreasing of the rotor spinning speed in dependence of the distance of the object (6) to the associated wind turbine (2').

7. Method according to any of the previous claims, wherein the safety mode further includes a step 120 of checking for available not utilized power in the wind farm 1.

8. Method according to claim 7, wherein the available power is checked by checking for curtailed or stopped not affected wind turbines (2) and/or checking for available power in energy storages connected with the wind farm 1.

9. Method according to claim 7 or 8, if the check according to step 120 reveal available additional power in the wind farm (1), then at least a part of it is activated to compensate for the power loss of power due to the activated safety mode of the affected wind turbine (2').

10. Method according to any of the previous claims, wherein the method further includes a step (150), that once it is detected the object (6) has left the detection zone (8), and no further objects (6) are present, the affected wind (2') returns to normal scheduled operation.

11. Wind farm (1) adapted to operate according to any of the previous claims.

12. A controller with a processor and memory storage adapted to perform the method according to any of the claims 1-10.
